# EUROPÄISCHE PATENTSCHRIFT

(11) **EP 1 524 417 B1**
(45) Veröffentlichungstag und Bekanntmachung des Hinweises auf die Patenterteilung: **13.12.2006**
(21) Anmeldenummer: 04021539.4
(22) Anmeldetag: 10.09.2004
(51) Int. Cl.: F01N 3/22, F01N 3/30, F02B 37/00, F02B 37/16

(54) **Verbrennungsmotor mit Abgasturbolader und Sekundärlufteinblasung, sowie Diagnose und Regelung der Sekundärlufteinblasung**
Internal combustion engine comprising an exhaust gas turbocharger and a secondary air injection, as well as diagnosis and control of the secondary air injection
Moteur à combustion interne comprenant un turbocompresseur à gaz d'échappement et une injection d'air secondaire, ainsi qu'un diagnostic et une commande de l'injection d'air secondaire

(30) Priorität: 16.10.2003 DE 10348131
(43) Veröffentlichungstag der Anmeldung: 20.04.2005
(73) Patentinhaber: DaimlerChrysler AG, 70567 Stuttgart (DE)
(72) Erfinder: Busch, Michael-Rainer, 73061 Ebersbach (DE)

(56) Entgegenhaltungen:
- US-A- 4 674 283
- US-A1- 2002 083 700
- PATENT ABSTRACTS OF JAPAN Bd. 1995, Nr. 02, 31. März 1995 (1995-03-31) & JP 06 323152 A (MAZDA MOTOR CORP), 22. November 1994 (1994-11-22)
- PATENT ABSTRACTS OF JAPAN Bd. 007, Nr. 173 (M-232), 30. Juli 1983 (1983-07-30) & JP 58 077119 A (HONDA GIKEN KOGYO KK), 10. Mai 1983 (1983-05-10)

## Beschreibung

Die Erfindung betrifft einen Verbrennungsmotor mit einer Sekundärlufteinblasung in die Abgasanlage des Verbrennungsmotors zur Nachbehandlung der Verbrennungsprodukte im Abgasstrom. Weiterhin betrifft die Erfindung ein Verfahren zur Überwachung der Sekundärlufteinblasung sowie eine Diagnosemöglichkeit für die Sekundärlufteinblasung.

Auf dem Weg zur heute üblichen katalytischen Nachbehandlung der Abgase eines Verbrennungsmotors wurde zunächst versucht, die Abgasemission durch thermische Nachverbrennung zu senken. Mit der thermischen Nachverbrennung lassen sich die im Abgas noch vorhandenen unverbrannten Bestandteile durch eine gewisse Verweilzeit bei hohen Temperaturen nachverbrennen. Bei fetter Motorabstimmung ist dazu die sogenannte Sekundärlufteinblasung erforderlich. Bei magerer Motorabstimmung erfolgt die Nachverbrennung durch den im Abgas noch vorhandenen Restsauerstoff. Mit Einsatz der Katalysatortechnologie wurde die thermische Nachverbrennung nur noch in der Warmlaufphase des Motors erforderlich. Mit der thermischen Nachverbrennung kann die Emission von Kohlenwasserstoffen und Kohlenmonoxiden in der Betriebsphase gesenkt werden, so lange der Katalysator seine Betriebstemperatur noch nicht erreicht hat. Zur Einhaltung scharfer Abgasgrenzwerte spielt deshalb die Anwendung der thermischen Nachbehandlung mit Sekundärlufteinblasung während der Warmlaufphase des Motors in Kombination mit katalytischer Nachbehandlung eine bedeutende Rolle, um die Aufheizzeit bis zum Erreichen der Betriebstemperatur des Katalysators deutlich zu verkürzen.

Ein gattungsgemäßer Verbrennungsmotor und ein gattungsgemäßes Verfahren zur Überwachung der Sekundärlufteinblasung ist beispielsweise aus der internationalen Patentanmeldung WO 02/052130 A1 bekannt. Diese Anmeldung beinhaltet ein Verfahren und eine Vorrichtung zur Überwachung und zur Bestimmung eines Sekundärluftmassenstroms, der in die Abgasanlage eines Verbrennungsmotors eingespeist wird. Die Sekundärluft wird hierbei mit einem Verdichter im Strömungsweg der Sekundärlufteinblasung verdichtet und der Massenfluss mit Drosselklappen, Stellventilen und einer Leistungsregulierung des Verdichters gesteuert. Die Messung und Überwachung der geförderten Sekundärluft erfolgt hierbei mit einem Temperatursensor und einem Messprinzip, das sich den Umstand zu Nutze macht, dass bei der durch den Sekundärluftverdichter verdichteten Luft ein Temperaturanstieg zu verzeichnen ist. Es besteht hierbei ein direkter Zusammenhang zwischen dem durch den Verdichtungsprozess hervorgerufenen Temperaturanstieg und der durch den Verdichter geförderten Luftmenge an Sekundärluft. Die gemessenen Temperaturwerte lassen sich also hinsichtlich der Förderleistung des Sekundärluftverdichters auswerten und ermöglichen auf diese Weise dessen Steuerung beziehungsweise Regelung. Dadurch gelingt es mit Vorteil auf ansonsten übliche Luftmassensensoren zu verzichten. Luftmassensensoren zum Beispiel auf der Basis von Heißfilmmessstreifen sind teuer und empfindlich gegenüber Verschmutzungen.

JP 06 323 142 offenbart einen hydraulischen Zusatzantrieb eines Abgasturboladers, wodurch Sekundärluft verdichtet werden kann, um diese stromaufwärts der Turbine des Abgasturboladers einblasen zu trimmen.

Ausgehend von dem vorbeschriebenen Stand der Technik stellt sich die erfindungsgemäße Aufgabe, einen Verbrennungsmotor mit einer alternativen Überwachung und Steuerung der Sekundärlufteinblasung anzugeben, wobei möglichst auf Temperatursensoren oder Luftmassensensoren verzichtet werden kann.

Die Lösung gelingt im wesentlichen mit einem Verbrennungsmotor, der über eine Ladeluftaufladung mittels eines Abgasturboladers verfügt und einer Sekundärlufteinblasung, deren Strömungsweg so gewählt wird, dass die eingeblasene Sekundärluftmenge einen Einfluss auf die Drehzahl des Turboladers hat. Durch Überwachung der Drehzahl des Turboladers wird eine durch die Sekundärlufteinblasung hervorgerufene Drehzahlerhöhung bestimmt und aus der Drehzahlerhöhung auf die Fördermenge an eingeblasener Sekundärluft geschlossen.

Dies hat den Vorteil, dass auf aufwendige Temperaturmessverfahren, wie sie bisher eingesetzt wurden, verzichtet werden kann. Drehzahlmessung kann insbesondere mit induktiv arbeitenden Drehzahlsensoren berührungslos und absolut verschleißfrei durchgeführt werden. Außerdem lassen sich diese induktiven Drehzahlsensoren miniaturisieren und äußerst kostengünstig herstellen.

In einer vorteilhaften Ausführungsform der Erfindung kann die Sekundärlufteinblasung mittels verdichteter Sekundärluft erfolgen. Hierzu ist im Strömungsweg der Sekundärluft ein Verdichter angeordnet, der über einen motorischen Antrieb oder über einen Turbinenantrieb verfügen kann.

In der bevorzugten Ausführungsform kann zur Verdichtung der Sekundärluft der Abgasturbolader des Verbrennungsmotors eingesetzt werden, mit dem gleichzeitig die Ladeluft verdichtet wird. Wird für die Verdichtung der Sekundärluft ein separater Verdichter eingesetzt, so lassen sich die beiden Verdichtungsprozesse für die Aufladung des Verbrennungsmotors und für die Verdichtung der Sekundärluft trennen, in dem beide Strömungswege für die Ladeluft als auch für die Sekundärluft aufwärts vor dem Verdichter des Abgasturboladers beginnen. Mit der erfindungsgemäßen Lösung ergibt sich auch ein vorteilhaftes Verfahren zur Überwachung der Sekundärlufteinblasung. Die Drehzahländerung des Abgasturboladers infolge der Sekundärlufteinblasung wird nämlich zur Ermittlung und Regelung der Fördermenge an Sekundärluft eingesetzt. Außerdem kann mit der Überwachung der Drehzahl des Abgasturboladers eine Diagnose der Sekundärlufteinblasung durchgeführt werden, in dem die gemessene Drehzahl des Abgasturboladers mit einer zu erwartenden Solldrehzahl entsprechend dem Betriebspunkt des Verbrennungsmotors verglichen wird und bei Abweichung von der zu erwartenden Solldrehzahl auf eine fehlerhafte Sekundärlufteinblasung geschlossen wird.

Ohne Beschränkung der Allgemeinheit werden im folgenden Ausführungsbeispiele der Erfindung anhand von Figuren näher erläutert.
Dabei zeigen:
- Fig. 1: Einen Verbrennungsmotor mit Ladeluftaufladung durch einen Abgasturbolader und Sekundärlufteinblasung,
- Fig. 2: Einen Verbrennungsmotor mit Ladeluftaufladung durch einen Abgasturbolader und mit einem Sekundärluftlader für die Sekundärlufteinblasung,
- Fig. 3: Einen Verbrennungsmotor mit Ladeluftaufladung durch einen Abgasturbolader sowie einen zweiten getrennten Abgasturbolader für die Sekundärluftaufladung,
- Fig. 4: eine Prinzipskizze zur Auswertung der Drehzahländerung des Abgasturboladers infolge der Sekundärlufteinblasung.

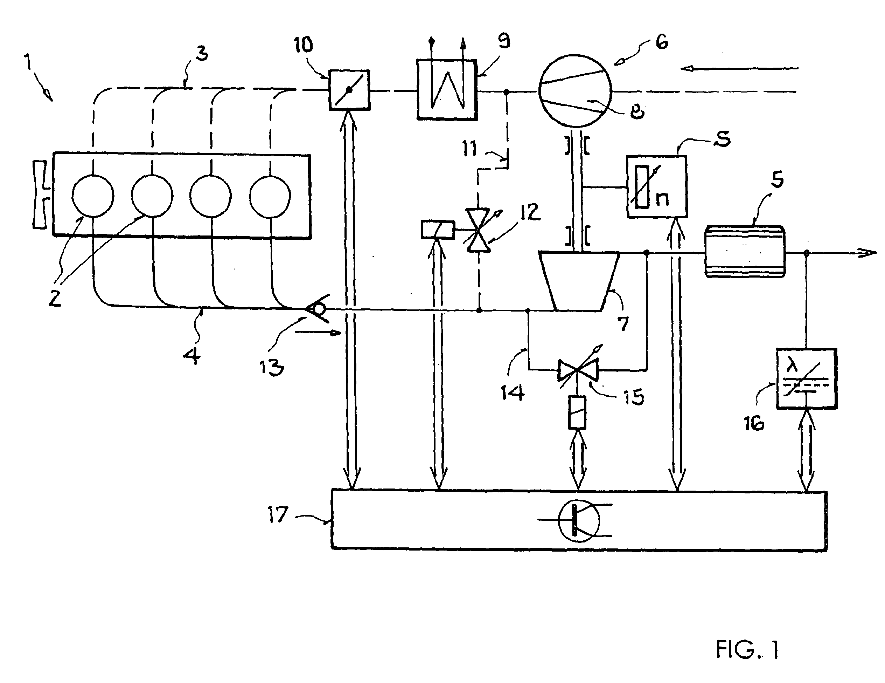

Figur 1 zeigt einen Verbrennungsmotor 1 mit mehreren Verbrennungszylindern 2, der über einen mit unterbrochenen Linien dargestellten Ansaugtrakt 3 mit Ladeluft versorgt wird, in die mit innerer oder äußerer Gemischbildung Kraftstoff hinzugefügt wird. Dieses zündfähige Gemisch wird in den Verbrennungszylindern 2 entflammt und die Verbrennungsprodukte werden über die mit durchgezogenen Linien dargestellte Abgasanlage 4 aus den Verbrennungszylindern ausgestoßen und zur katalytischen Nachbehandlung einem Katalysator 5 zugeführt. Ein Abgasturbolader 6 hat seine Turbine 7 im Strömungsweg der Abgasanlage und seinen Verdichter 8 im Strömungsweg der Ansaugluft. Optional kann die verdichtete Ansaugluft mit einem Ladeluftkühler 9 gekühlt werden. Für die Ladeluftregelung ist eine Drosselklappe 10 abwärts des Ladeluftverdichters 8 und des Ladeluftkühlers 9 vorgesehen. abwärts vom Ladeluftverdichter 8 zweigt vom Ansaugtrakt eine Sekundärluftleitung 11 ab und führt über ein Regelventil 12 zur Sammelleitung der Abgasanlage. Die Sekundärluftleitung 11 mündet abwärts vom Auslassventil 13 und aufwärts von der Turbine 7 des Abgasturboladers 6 in die Abgasanlage. Die Turbinenseite des Abgasturboladers 6 kann mit einem regelbaren Bypass 14 umgangen werden. Üblicherweise erfolgt die Auslegung des Abgasturboladers so, dass sich bereits bei niedriger Motordrehzahl ein hoher Ladedruck einstellt. Dadurch kann allerdings der Ladedruck im oberen Drehzahlbereich so stark ansteigen, dass der Motor überlastet würde. Vor allem bei Motoren mit großer Drehzahlspanne muss deshalb über ein sogenanntes Waste-Gate die Turbine umgangen werden, wodurch allerdings Abgasenergie verloren geht. Zur Regelung des Waste-Gate kann ein Regelventil 15 eingesetzt werden. Die Drehzahl des Turboladers 6 wird mit einer Vorrichtung zur Drehzahlbestimmung S überwacht. Diese Vorrichtung kann ein herkömmlicher induktiver Drehzahlsensor sein. Der Abgas selbst wird in seiner Zusammensetzung nach dem Katalysator 5 in an sich bekannter Weise mit einer Lambdasonde 16 analysiert und überwacht. Zum Betrieb und Überwachung des Verbrennungsprozesses im Verbrennungsmotor 1 stehen sämtliche Stell- und Regelorgane sowie sämtliche Vorrichtungen zur Messwerterfassung mit einem Steuergerät 17, das vorzugsweise das Motorsteuergerät ist, in Kommunikationsverbindung. In dem Steuergerät 17 sind sämtliche Anwendungsprogramme zur Steuerung des Verbrennungsprozesses, zur Steuerung der Ladeluftansaugung und zur Steuerung des Abgastraktes und der Sekundärlufteinblasung implementiert. Die Sekundärlufteinblasung nach dem Auslassventil 13 wird verwendet, um zum Beispiel beim Warmlaufen des Verbrennungsmotors den Katalysator 5 schnell aufzuheizen. Die notwendige Energie für diesen Aufheizprozess wird erzielt, in dem der Sauerstoff der Sekundärlufteinblasung mit den oxidativen Abgasbestandteilen des fett laufenden Motors über eine exotherme Reaktion reagiert. Auch bei anderen notwendigen Aufheizungen, wie zum Beispiel Abbrennen von Russpartikeln in Dieselrussfiltern, kann diese Strategie verwendet werden. Durch die Einleitung der Sekundärluft zwischen Auslassventil und Turbine des Abgasturboladers wird die Drehzahl des Abgasturboladers erhöht. Diese Erhöhung steht in direktem Zusammenhang mit der eingeblasenen Sekundärluftmasse. Das heißt, je höher die Masse der eingeblasenen Sekundärluft desto höher die Drehzahl des Abgasturboladers. Die Bestimmung einer Drehzahlerhöhung infolge der Sekundärlufteinblasung erfolgt unter bestimmten Stabilitätsbedingungen für den Betriebspunkt des Verbrennungsmotors wie zum Beispiel Konstanthalten der Motordrehzahl beziehungsweise Erfassen der Drehzahländerung des Verbrennungsmotors, Konstanthalten der Motorlast beziehungsweise Erfassen der Laständerung am Verbrennungsmotor und eine möglichst konstant gehaltene Abgastemperatur. Im Gegensatz zur Messung der Abgasmenge mit der Lambdasonde kann die Bestimmung der eingeblasenen Sekundärluftmasse durch eine Drehzahlüberwachung des Abgasturboladers schon in den ersten Sekunden nach einem Kaltstart des Verbrennungsmotors bestimmt und damit diagnostiziert werden. Dies hat den Vorteil, dass die Bestimmung der Sekundärluftmasse nicht an das Erreichen der Betriebstemperatur des Katalysators 5 gebunden ist.

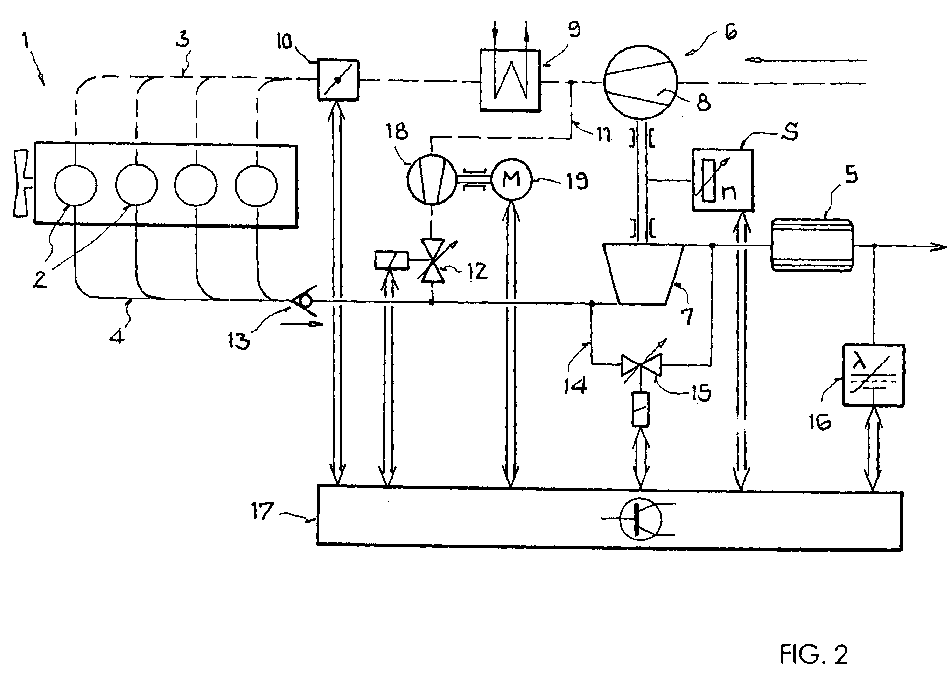

Figur 2 zeigt im wesentlichen die gleichen Vorrichtungsmerkmale wie der Verbrennungsmotor aus Figur 1. Zusätzlich zu den Ausführungsbeispielen nach Figur 1 enthält das Ausführungsbeispiel nach Figur 2 im Strömungsweg der Sekundärlufteinblasung einen motorisch angetriebenen Verdichter 18 als Sekundärluftlader. Die Verdichterleistung ist hierbei über den ansteuerbaren Motor 19 vom Steuergerät 17 regelbar. Die Funktion des Regelventils 12 in der Sekundärluftleitung 11 kann bei einer Leistungsregelung des Verdichters auf ein Zu- und Abschalten der Sekundärluftleitung 11 reduziert werden. Eine Sekundärlufteinblasung mit Sekundärluftaufladung hat den Vorteil, dass sichergestellt werden kann, dass der Druck in der Sekundärluftleitung 11 bei allen Betriebspunkten des Verbrennungsmotors größer ist als der Druck in der Abgasanlage 4.

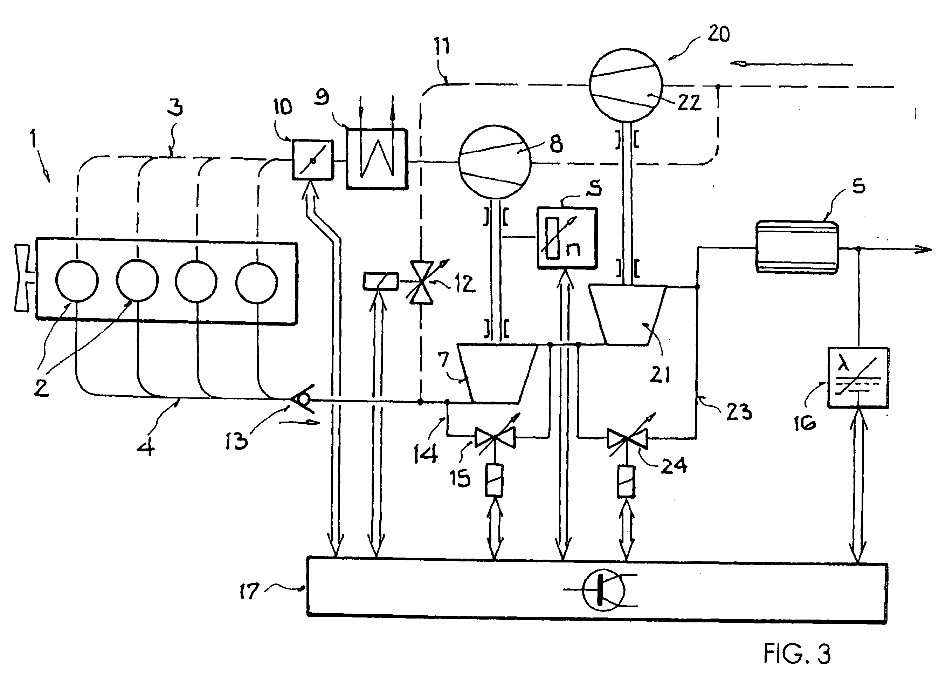

Figur 3 zeigt wieder im wesentlichen die gleichen Vorrichtungsmerkmale wie das Ausführungsbeispiel der Figur 1. Im Unterschied zu den beiden vorangegangenen Ausführungsbeispielen aus Figur 1 und Figur 2 hat jedoch das Ausführungsbeispiel der Figur 3 eine geänderte Strömungswegführung für die Sekundärlufteinblasung. Die Sekundärluftleitung 11 zweigt in diesem Ausführungsbeispiel aufwärts von dem Verdichter 8 des Abgasturboladers für die Ladeluftaufladung von dem Ansaugtrakt 3 ab. Dadurch kann die Sekundärlufteinblasung vollständig von der Ladeluftaufladung entkoppelt werden. Auch bei dieser entkoppelten Sekundärlufteinblasung kann ein Sekundärluftlader zur Verdichtung der Sekundärluft eingesetzt werden. Als Sekundärluftlader kommt ein motorisch angetriebener Verdichter, wie er im Ausführungsbeispiel der Figur 2 gezeigt ist, in Betracht, oder ein zweiter weiterer Abgasturbolader 20, dessen Turbine 21 sich im Strömungsweg der Abgasanlage befindet und dessen Verdichter 22 sich im Strömungsweg der Sekundärlufteinblasung befindet. Auch dieser zweite Abgasturbolader hat zur Leistungsregulierung einen Bypass 23, dessen Öffnungsquerschnitt mit einem Regelventil 24 eingestellt und geregelt werden kann.

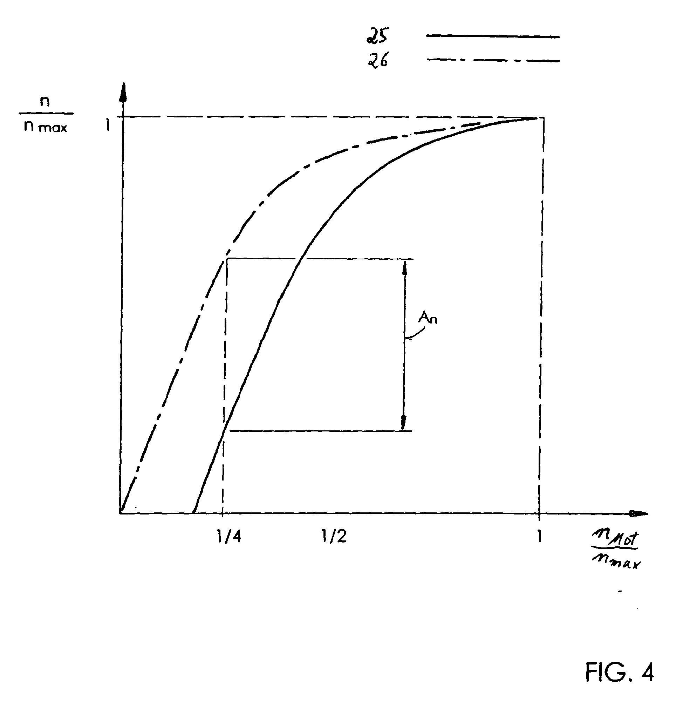

Allen Ausführungsbeispielen gemeinsam ist die Art und Weise, wie die Fördermenge an Sekundärluft bestimmt wird. Die Bestimmung der Fördermenge an Sekundärluft wird mit dem Schaubild der Figur 4 verdeutlicht. Erfindungsgemäß mündet die Sekundärluftleitung 11 für die Sekundärlufteinblasung im Abgasstrang aufwärts von der Turbine des Abgasturboladers 6 ein. Dadurch bewirkt eine Sekundärlufteinblasung in die Abgasanlage eine Drehzahlerhöhung des Abgasturboladers. Bei ansonsten konstanten Betriebsbedingungen des Verbrennungsmotors ist diese Drehzahlerhöhung ein direktes Maß für die Menge der eingeblasenen Sekundärluft. In dem Schaubild der Figur 4 ist zur Erläuterung die Drehzahl des Abgasturboladers (n) über der Motordrehzahl des Verbrennungsmotors (n_{Mot}) aufgetragen. Sowohl die Drehzahl des Abgasturboladers als auch die Motordrehzahl des Verbrennungsmotors sind hierbei auf eine Maximaldrehzahl (nₘₐₓ) normiert. Die durchgezogene Linie (25) in Figur 4 stellt das normierte Drehzahlverhältnis ohne Sekundärluft dar, die strichpunktierte Linie (26) dasjenige mit Sekundärluft. Die Motordrehzahl ist eine der wichtigsten Betriebsparameter zur Bestimmung der Leistungsabgabe des Verbrennungsmotors. Andere wichtige Betriebsparameter sind insbesondere das anliegende Drehmoment, der Masse an Ladeluft, die Motortemperatur und andere. Zur Erläuterung wurde lediglich die Motordrehzahl herausgegriffen, um das Schaubild nach Figur 4 möglichst einfach zu gestalten. Natürlich können zur Bestimmung der Fördermenge an Sekundärluft auch mehrdimensionale Kennfelder, die die vorgenannten Betriebsparameter mit umfassen, herangezogen werden. Grundsätzlich unverändert bleibt dabei, dass zu einem gegebenen Betriebspunkt des Verbrennungsmotors die Drehzahl des Abgasturboladers ohne Sekundärlufteinblasung bekannt ist, und daher eine mit einem Drehzahlsensor festgestellte Erhöhung der Drehzahl des Abgasturboladers die Bestimmung der Fördermenge an Sekundärluft infolge einer Sekundärlufteinblasung erlaubt. Der Drehzahlverlauf des Abgasturboladers ohne Sekundärlufteinblasung ist in Figur 4 mit einer durchgezogenen Linie dargestellt. Der Drehzahlverlauf des Abgasturboladers mit Sekundärlufteinblasung ist mit einer strichpunktierten Linie dargestellt. Grundsätzlich sind beide Drehzahlverläufe bekannt und als Sollführungsgrößen in dem Steuergerät 17 für die Leistungsregulierung des Motors und für die thermische Nachbehandlung der Abgase mit Sekundärluft abgelegt. Mit einer Drehzahlüberwachungseinheit wird die tatsächliche Drehzahl des Abgasturboladers ermittelt und überwacht. Ist eine Sekundärlufteinblasung notwendig, so wird die Menge an eingeblasener Sekundärluft solange erhöht, bis die Drehzahl des Abgasturboladers bei entsprechendem Betriebspunkt des Verbrennungsmotors sich der Sollkennlinie (strichpunktiert) für den Drehzahlverlauf mit Sekundärlufteinblasung annähert. Gelingt eine derart vorgegebene Drehzahlerhöhung, so ist die Sekundärlufteinblasung in Ordnung. Gelingt die Erhöhung der Drehzahl auf die Sollkennlinie nicht, so liegt höchstwahrscheinlich im Sekundärluftpfad ein Fehler vor. Mit einem Auswerteprogramm im Steuergerät kann dies festgestellt werden, und ein entsprechender Warnhinweis abgegeben werden. Dies ermöglicht auf einfache Weise eine Diagnose der Sekundärlufteinblasung. Das Messsignal der Drehzahlerfassungseinrichtung kann daher sowohl zur Diagnose als auch zur Regelung der Sekundärlufteinblasung genutzt werden. Das heißt je nach Betriebspunkt und Temperatur des Verbrennungsmotors kann eine beliebige Fördermenge an Sekundärluft in die Abgasanlage eingeblasen und eingeregelt werden.

Zusätzlich kann eine Kontrolle und Plausibilisierung der eingestellten und eingeregelten Werte über die Auswertung des Lambdasondensignals erfolgen. Mit der Lambdasonde wird der Restsauerstoffgehalt des Abgases gemessen. Das Signal der Sonde erlaubt daher eine Plausibilisierung ob eine Sekundärlufteinblasung vorliegt oder nicht.

## Patentansprüche

1. Verbrennungsmotor (1) mit einem Ansaugtrakt (3) für die Ansaugluft und einer Abgasanlage (4) für die Verbrennungsprodukte des Verbrennungsmotors, sowie einer Sekundärlufteinblasung (11,12,18,22) in die Abgasanlage zur Nachbehandlung der Verbrennungsprodukte und einer Messeinrichtung zur Ermittlung der Fördermenge an Sekundärluft,
**dadurch gekennzeichnet,**
- **dass** ein Abgasturbolader (6) mit seiner Turbine (7) im Strömungsweg der Abgasanlage und mit seinem Verdichter (8) im Strömungsweg des Ansaugtraktes angeordnet ist und eine Verdichtung der Ansaugluft bewirkt,
- **dass** die Sekundärlufteinblasung im Strömungsweg der Abgasanlage stromaufwärts vor der Turbine des Turboladers erfolgt
- und **dass** die Messeinrichtung (S) zur Ermittlung der Fördermenge an Sekundärluft ein Vorrichtung zur Drehzahlbestimmung des Turboladers ist.

2. Verbrennungsmotor nach Anspruch 1,
**dadurch gekennzeichnet,**
**dass** in der Sekundärluftleitung (11) ein motorisch angetriebener Verdichter (18) für eine Verdichtung der Sekundärluft sorgt.

3. Verbrennungsmotor nach Anspruch 1,
**dadurch gekennzeichnet,**
**dass** in der Sekundärluftleitung (11) ein Verdichter (22) eines Abgasturboladers (20) für eine Verdichtung der Sekundärluft sorgt.

4. Verbrennungsmotor nach einem der Ansprüche 1 bis 3,
**dadurch gekennzeichnet,**
**dass** die Sekundärluftleitung (11) im Ansaugtrakt stromabwärts nach dem Verdichter (8) des Abgasturboladers (6) abzweigt und in der Abgasanlage stromaufwärts vor der Turbine (7) des Abgasturboladers (6) einmündet.

5. Verbrennungsmotor nach einem der Ansprüche 1 bis 3
**dadurch gekennzeichnet,**
**dass** die Sekundärluftleitung (11) im Ansaugtrakt stromaufwärts vor dem Verdichter (8) des Abgasturboladers (6) abzweigt und in der Abgasanlage stromaufwärts vor der Turbine (7) des Abgasturboladers (6) einmündet.

6. Verbrennungsmotor nach einem der Ansprüche 1 bis 5.
**dadurch gekennzeichnet,**
**dass** im Strömungsweg der Sekundärlufteinblasung ein Regelventil (12) angeordnet ist.

7. Verfahren zur Überwachung der Sekundärlufteinblasung in die Abgasanlage eines Verbrennungsmotors, bei dem die Fördermenge an Sekundärluft mit einer Messeinrichtung (S) ermittelt wird und mit einer regelbaren Fördereinrichtung (12,18,19,20,23,24) eingestellt wird,
**dadurch gekennzeichnet,**
- **dass** ein Abgasturbolader (6) mit seiner Turbine (7) im Strömungsweg der Abgasanlage und mit seinem Verdichter (8) im Strömungsweg des Ansaugtraktes angeordnet ist und eine Verdichtung der Ansaugluft bewirkt
- und **dass** die Sekundärlufteinblasung (11,12,18,22) Einfluss auf die Drehzahl des Abgasturboladers (6) hat und die von der Sekundärlufteinblasung bewirkte Drehzahländerung mit der Messeinrichtung (S) zur Ermittlung der Fördermenge an Sekundärluft erfasst wird.

8. Verfahren nach Anspruch 7,
**dadurch gekennzeichnet,**
**dass** die Fördermenge an Sekundärluft mit einem Regelventil (12) in der Sekundärluftleitung (11) beeinflusst wird.

9. Verfahren nach Anspruch 7 oder 8,
**dadurch gekennzeichnet,**
**dass** die Fördermenge an Sekundärluft durch die Förderleitung einer Strömungsmaschine (18,22) in der Sekundärluftleitung (11) beeinflusst wird.

10. Verfahren nach einem der Ansprüche 7 bis 9,
**dadurch gekennzeichnet,**
**dass** die Fördermenge an Sekundärluft bei bekannter Abgasmasse des Verbrennungsmotors aus der Drehzahldifferenz des Abgasturboladers mit Sekundärlufteinblasung und ohne Sekundärlufteinblasung ermittelt wird.

11. Verfahren nach einem der Ansprüche 7 bis 10,
**dadurch gekennzeichnet**,
die Drehzahländerung des Abgasturboladers in Folge der Sekundärlufteinblasung zur Regelung der Sekundärlufteinblasung eingesetzt wird.

12. Verfahren nach einem der Ansprüche 7 bis 11,
**dadurch gekennzeichnet**,
die Drehzahlerfassung des Abgasturboladers zur Diagnose der Sekundärlufteinblasung eingesetzt wird.

13. Verfahren nach Anspruch 12,
**dadurch gekennzeichnet,**
**dass** die Diagnose der Sekundärlufteinblasung auf der Abweichung der gemessenen Drehzahl des Abgasturboladers von einer aus dem Betriebspunkt des Verbrennungsmotors bekannten Solldrehzahl beruht.

## Claims

1. Internal combustion engine (1) having an intake suction (3) for the intake air and an exhaust system (4) for the combustion products of the internal combustion engine, as well as a secondary air injection (11, 12, 18, 22) into the exhaust system for aftertreatment of the combustion products, and a measuring device for determining the quantity of secondary air delivered,
**characterized in that**
- the turbine (7) of an exhaust-gas turbocharger (6) is arranged in the flow path of the exhaust system, and the compressor (8) of the exhaust-gas turbocharger is arranged in the flow path of the intake section and is responsible for compressing the intake air,
- the secondary air injection in the flow path of the exhaust system takes place upstream of the turbine of the turbocharger,
- and the measuring device (S) for determining the quantity of secondary air delivered is an apparatus for determining the rotational speed of the turbocharger.

2. Internal combustion engine according to Claim 1, **characterized in that** a motor-driven compressor (18) in the secondary-air line (11) is responsible for compressing the secondary air.

3. Internal combustion engine according to Claim 1, **characterized in that** a compressor (22) of an exhaust-gas turbocharger (20) in the secondary-air line (11) is responsible for compressing the secondary air.

4. Internal combustion engine according to one of Claims 1 to 3, **characterized in that** the secondary-air line (11) branches off in the intake section downstream of the compressor (8) of the exhaust-gas turbocharger (6) and opens out in the exhaust system upstream of the turbine (7) of the exhaust-gas turbocharger (6).

5. Internal combustion engine according to one of Claims 1 to 3, **characterized in that** the secondary-air line (11) branches off in the intake section upstream of the compressor (8) of the exhaust-gas turbocharger (6) and opens out in the exhaust system upstream of the turbine (7) of the exhaust-gas turbocharger (6).

6. Internal combustion engine according to one of Claims 1 to 5, **characterized in that** a control valve (12) is arranged in the flow path of the secondary air injection.

7. Method for monitoring the secondary air injection into the exhaust system of an internal combustion engine, in which the quantity of secondary air delivered is determined using a measuring device (S) and is set using a controllable delivery device (12, 18, 19, 20, 23, 24),
**characterized in that**
- the turbine (7) of an exhaust-gas turbocharger (6) is arranged in the flow path of the exhaust system, and the compressor (8) of the exhaust-gas turbocharger (6) is arranged in the flow path of the intake section and compresses the intake air,
- and the secondary air injection (11, 12, 18, 22) influences the rotational speed of the exhaust-gas turbocharger (6), and the change in rotational speed effected by the secondary air injection is recorded using the measuring device (S) for determining the quantity of secondary air delivered.

8. Method according to Claim 7, **characterized in that** the quantity of secondary air delivered is influenced using a control valve (12) in the secondary-air line (11).

9. Method according to Claim 7 or 8, **characterized in that** the quantity of secondary air delivered is influenced by the feed line of a turbomachine (18, 22) in the secondary-air line (11).

10. Method according to one of Claims 7 to 9, **characterized in that** the quantity of secondary air delivered, if the mass of exhaust gas from the internal combustion engine is known, is determined from the difference in the rotational speed of the exhaust-gas turbocharger with secondary air injection and without secondary air injection.

11. Method according to one of Claims 7 to 10, **characterized in that** the change in the rotational speed of the exhaust-gas turbocharger as a result of the secondary air injection is used to control the secondary air injection.

12. Method according to one of Claims 7 to 11, **characterized in that** the recording of the rotational speed of the exhaust-gas turbocharger is used to diagnose the secondary air injection.

13. Method according to Claim 12, **characterized in that** the diagnosis of the secondary air injection is based on the deviation in the measured rotational speed of the exhaust-gas turbocharger from a desired rotational speed which is known from the operating point of the internal combustion engine.

## Revendications

1. Moteur à combustion interne (1) comprenant un conduit d'admission (3) pour l'air d'admission et un système de gaz d'échappement (4) pour les produits de combustion du moteur à combustion interne, ainsi qu'une injection d'air secondaire (11, 12, 18, 22) dans le système de gaz d'échappement pour le post-traitement des produits de combustion et un dispositif de mesure pour déterminer la quantité refoulée d'air secondaire,
**caractérisé en ce**
- **qu'**un turbocompresseur à gaz d'échappement (6) est disposé avec sa turbine (7) dans la trajectoire d'écoulement du système de gaz d'échappement et avec son compresseur (8) dans la trajectoire d'écoulement du conduit d'admission et provoque une compression de l'air d'admission,
- **en ce que** l'injection d'air secondaire dans la trajectoire d'écoulement du système de gaz d'échappement a lieu en amont de la turbine du turbocompresseur,
- et **en ce que** le dispositif de mesure (S) pour déterminer la quantité refoulée d'air secondaire est un dispositif pour déterminer la vitesse du turbocompresseur.

2. Moteur à combustion interne selon la revendication 1,
**caractérisé en ce**
**qu'**un compresseur (18) à moteur assure une compression de l'air secondaire dans la conduite d'air secondaire (11).

3. Moteur à combustion interne selon la revendication 1,
**caractérisé en ce**
**qu'**un compresseur (22) d'un turbocompresseur à gaz d'échappement (20) assure une compression de l'air secondaire dans la conduite d'air secondaire (11).

4. Moteur à combustion interne selon l'une quelconque des revendications 1 à 3,
**caractérisé en ce que**
la conduite d'air secondaire (11) bifurque dans le conduit d'admission en aval après le compresseur (8) du turbocompresseur à gaz d'échappement (6) et débouche dans le système de gaz d'échappement en amont avant la turbine (7) du turbocompresseur à gaz d'échappement (6).

5. Moteur à combustion interne selon l'une quelconque des revendications 1 à 3,
**caractérisé en ce que**
la conduite d'air secondaire (11) bifurque dans le conduit d'admission en amont avant le compresseur (8) du turbocompresseur à gaz d'échappement (6) et débouche dans le système de gaz d'échappement en amont avant la turbine (7) du turbocompresseur à gaz d'échappement (6).

6. Moteur à combustion interne selon l'une quelconque des revendications 1 à 5,
**caractérisé en ce**
**qu'**une soupape de régulation (12) est disposée dans la trajectoire d'écoulement de l'injection d'air secondaire.

7. Procédé de contrôle de l'injection d'air secondaire dans le système de gaz d'échappement d'un moteur à combustion interne, dans lequel la quantité refoulée d'air secondaire est déterminée avec un dispositif de mesure (S) et est ajustée avec un dispositif de refoulement réglable (12, 18, 19, 20, 23, 24),
**caractérisé en ce**
- **qu'**un turbocompresseur à gaz d'échappement (6) est disposé avec sa turbine (7) dans la trajectoire d'écoulement du système de gaz d'échappement et avec son compresseur (8) dans la trajectoire d'écoulement du conduit d'admission et provoque une compression de l'air d'admission,
- et **en ce que** l'injection d'air secondaire (11, 12, 18, 22) a une influence sur la vitesse du turbocompresseur à gaz d'échappement (6) et la variation de vitesse provoquée par l'injection d'air secondaire est détectée avec le dispositif de mesure (S) pour déterminer la quantité refoulée d'air secondaire.

8. Procédé selon la revendication 7,
**caractérisé en ce que**
la quantité refoulée d'air secondaire est influencée par une soupape de régulation (12) dans la conduite d'air secondaire (11).

9. Procédé selon la revendication 7 ou 8,
**caractérisé en ce que**
la quantité refoulée d'air secondaire est influencée par la conduite de refoulement d'une turbosoufflante (18, 22) dans la conduite d'air secondaire (11).

10. Procédé selon l'une quelconque des revendications 7 à 9,
**caractérisé en ce que**
la quantité refoulée d'air secondaire est déterminée lorsqu'on connaît le volume de gaz d'échappement du moteur à combustion interne à partir de la différence de vitesse du turbocompresseur à gaz d'échappement avec injection d'air secondaire et sans injection d'air secondaire.

11. Procédé selon l'une quelconque des revendications 7 à 10,
**caractérisé en ce que**
la variation de vitesse du turbocompresseur à gaz d'échappement est utilisée suite à l'injection d'air secondaire pour réguler l'injection d'air secondaire.

12. Procédé selon l'une quelconque des revendications 7 à 11,
**caractérisé en ce que**
la détection de la vitesse du turbocompresseur à gaz d'échappement est utilisée pour diagnostiquer l'injection d'air secondaire.

13. Procédé selon la revendication 12,
**caractérisé en ce que**
le diagnostic de l'injection d'air secondaire repose sur l'écart de la vitesse mesurée du turbocompresseur à gaz d'échappement par rapport à une vitesse de consigne connue provenant du point de fonctionnement du moteur à combustion interne.
